# EUROPEAN PATENT APPLICATION

(11) **EP 1 089 215 A1**
(43) Date of publication of application: **04.04.2001**
(21) Application number: 00114434.4
(22) Date of filing: 05.07.2000
(51) Int. Cl.: G06K 11/08

(54) **Optical sensing and control of movements using multiple passive sensors**

(30) Priority: 14.09.1999 US 395551
(71) Applicant: MITSUBISHI DENKI KABUSHIKI KAISHA, Tokyo 100-8310 (JP)
(72) Inventor: Moghaddam, Baback, Chambridge, MA 02139 (US); Brand, Matthew E., Chambridge, MA 02139 (US); Waters, Richard C., Concord, MA 01742 (US); Freeman, William T., Acton, MA 01720 (US); Beardsley, Paul A., Boston, MA 02116 (US)
(74) Representative: Pfenning, Meinig & Partner

(57) **Abstract**

A passive sensor determines three-dimensional motion of an object. Multiple passive sensors are mounted to the object. Each sensor measures a scene to produce a sequence of images. Global displacement vectors are determined for pairs of successive images captured by each sensor, and the 6-DOF of full three-dimensional motion is estimated from the global displacement vectors.

## Description

### FIELD OF THE INVENTION

This invention relates generally to sensing motion, and more particularly, to sensing the six degrees-of-freedom (DOF) corresponding to three-dimensional motion with passive sensors.

### BACKGROUND OF THE INVENTION

The need for natural human-computer interfaces, and multi-dimensional sensing and control devices in particular, has led to various sensing devices which measure translational and rotational degrees-of-freedom (DOF).

U.S. Patent No. 5,508,736 describes a video signal processing apparatus for producing a composite signal for simultaneous display of data and video information. The video signal processing apparatus includes means for generating data signals representing the physical status of a video camera with respect to a fixed frame of reference. The physical status being the position, orientation, height, altitude or speed;means for receiving video signals from the camera and means for combining the data signals with the video signals to produce a composite signal by which the data information and the video information contained in the video signals can be displayed simultaneously, and means for transmitting the combined signal to a remote location. The camera status is acquired from navigational instrumentation such as can be found in airplanes.

United States Patent No. 5,881,321 describes inertial sensors that are incorporated into the structure of a motion picture or video camera, to detect its movement along three orthogonal axes, as well as angular rotation about the three axes. Linear and angular acceleration detected by the sensors is transmitted from their locations on the camera to a remote site by means of wireless communication. A time code is coupled with the data from the sensors so that the instantaneous position of the camera can be determined for any point in time during the recording of live action. At the remote site, the sensor data are processed to determine absolute camera position, and provided to an image generating system, to thereby facilitate real-time generation of images that are consistent with the scene being recorded.

U.S. Patent No. 5854482 describes a pointing device that utilizes a photodector array. A cursor control device for personal computers and workstations includes a patterned ball and which relies on other patterned surfaces, which recognizes changes in the position of the pattern relative to a sensor having an array of photosensitive elements.

U.S. Patent No. 5774113 describes a 3-D mouse mounted on a pedestal. The optical mouse employs a special reflective mouse pad instead of a rolerball. The optical mouse has two LEDs that shine two light beams, one red and one infrared, onto the mouse pad. Reflected light beams re-enter the mouse through lenses which focuses the light onto photodetectors. As the mouse moves, the pad alternately absorbs and reflects light; blue lines on the pad absorb the red light while black lines absorb the infrared light. The photodetectors detect the "makes" and "breaks," which the mouse converts to positional signals for the computer.

U.S. Patent No. 5,517,211 describes an optical signal detector for an electro-optical mouse. The detector includes elliptical lenses for X-axis and Y-axis to longitudinally latitudinally magnify X-axis and Y-axis images taken on a grating work pad, permitting longitudinal magnification to be greater than latitudinal magnification. Receivers respectively receive magnified X-axis and Y-axis images so as to provide signals indicative of the direction and amount of movement of the optical signal detector for moving the visible cursor from position to position on a display screen.

Recently, Microsoft Corporation introduced an "optical mouse" the IntelliMouse™. Information describing this mouse can be found at: "http://www.microsoft.com/presspass/features/1999/04-19mouse.htm." This is an active optical device, with a built-in light source. The mouse uses correlation analysis to compute translational displacement only. In addition, this device is restricted to work only on a desk surface like a conventional mechanical mouse.

Various other optical tracking systems have been developed in recent years. Ward et al., in "A demonstrated optical tracker with scalable work area for head-mounted display systems," Proceedings of 1992 Symposium on Interactive 3D Graphics, pp. 43-52, 1999, described an opto-electronic head-tracking system for head-mounted displays in VR applications. Their system features a scalable work area that measures 10' x 12', a measurement update rate of 20-100 Hz with 20-60 ms of delay, and a resolution specification of 2 mm and 0.2 degrees. The sensors consist of four head-mounted imaging devices that view infrared light-emitting diodes (LEDs) mounted in a 10' x 12' grid of modular 2' x 2' suspended ceiling panels. Photogrammetric techniques allow the head's location to be expressed as a function of the known LED positions and their projected images on the sensors. The work area is scaled by simply adding panels to the ceiling's grid. Discontinuities that occurred when changing working sets of LEDs were reduced by carefully managing all error sources, including LED placement tolerances, and by adopting an overdetermined mathematical model for the computation of head position: space resection by collinearity.

More recently, You et al., in "A motion-stabilized outdoor augmented reality system," IEEE VR '99, August 1999, demonstrated a hybrid approach to tracking. Their hybrid tracking integrates inertial and vision-based technologies. They exploit the complementary nature of the two technologies to compensate for the weaknesses in each component. These require object/landmark tracking, and, hence, some form of recognition and correspondence. This are difficult vision tasks.

At the hardware level, specialized VLSI chips for motion-sensing at least date back to the design of Tanner et al., see "An integrated analog optical motion sensor," VLSI Signal Processing II, pp. 59-87, 1988. Their sensor computes the global optical flow using a variant of the classical optical flow algorithm first described by Schunk et al. in "Determining optical flow," Artificial Intelligence, 17:185-203, 1981.

Bair et al. describe the use of analog VLSI chips for computing zero-crossings which are then tracked off-chip, see "Real-time motion detection using an analog VLSI zero-crossing chip," Proc. SPIE, Visual Information Processing: From Neurons to Chips, V. SPIE-1473, pp. 59-65, 1991. A more exotic VLSI motion sensor is the "insect vision" chip of Moini, see "Design of a VLSI motion detector based upon the insect visual system," Master's thesis, University of Adelaide, 1994. The chip emulates the biological motion analysis in the visual system of the fly. However, the complex design and manufacturing cost of specialized motion-sensing VLSI chips is prohibitive and a limiting factor in most commercial applications.

Therefore, it is desired to use low-cost, off-the-shelf image sensors that can determine motion in multiple degrees-of-freedom. The sensors should be passive and capable of operating as a "free floating" or hand-held pointing device or a general motion sensor attached to any moving object, including users to provide a general purpose passive optical 6-DOF motion sensor.

### SUMMARY OF THE INVENTION

The invention provides an apparatus and method for detecting the motion of objects using passive sensors. The motion sensors allow multiple degrees-of-freedom to be estimated for a hand-held joystick or an optical wand. When attached to a moving object, for example, a ball or a person, the sensors can determine all six degrees-of-freedom of translation, and rotation. Applications of the invention include sensing and control of real and virtual objects, game controllers, advanced computer interfaces, and optical tracking and telemetry.

More particularly, the invention provides for the sensing of three-dimensional motion of an object. Multiple passive sensors are mounted on the object. Each sensor measures a scene to produce a sequence of images. Global displacements vectors are determined for pairs of successive images, and three-dimensional motion is recovered from the global displacement vectors of multiple cameras. In one aspect of the invention, three mutually orthogonal sensors are used.

### BRIEF DESCRIPTION OF THE DRAWINGS

Figure 1 is a graph of displacement (motion) of two consecutive one dimensional projections;
Figures 2a and 2d are two consecutive images in a sequence;
Figures 2b and 2c are vertical and horizontal projections of the image of Figure 2a;
Figures 3a-3c are consecutive images with scaling;
Figures 3d-3f are the corresponding horizontal projections;
Figure 4a is a diagram of three sensors mounted orthogonally;
Figure 4b is a diagram of correspondence between local camera coordinates and world object coordinates;
Figure 4c is a table of signs for various sensor displacements;
Figure 4d is a diagram of six sensors mounted orthogonally;
Figures 5a-5b are diagrams of two sensors mounted on one yoke;
Figure 5c is a diagram of four sensors mounted on two yokes;
Figure 6 is a diagram of six sensors mounted on three yokes;
Figure 7 is a diagram of six sensors aligned with faces of a cubic enclosure;
Figure 8 are four sensors arranged within an object;
Figure 9 are four sensor mounted on one yoke; and
Figure 10 are multiple sensors mounted on a person.

### DETAILED DESCRIPTION OF THE PREFERRED EMBODIMENT

### Introduction

We describe a passive sensing device which can be used as a six degrees-of-freedom (6-DOF) joystick, and a servo/controller for real and virtual objects. The preferred sensor is an "Artificial Retina" (AR) CMOS chip which can determine two-dimensional (2D) camera motion, i.e., global optical flow. The AR is described below. It should be noted that the sensors can also be infra-red sensors, or other sensors that acquire images. In this description, optical sensors are used in example applications, but it should be understood that the invention can use any type of passive sensor that produce images such as x-ray images, infra-red images, RF images, and the like.

We describe applications where multiple passive 2D sensors are attached to objects, e.g., users, hand-held controllers, toys, vehicles, and the like. We measure relative motion in real-time using passive components. Some of the applications of these motion-sensing devices include, but are not limited to: a passive optical mouse (2D pointing device), a passive optical wand (3D pointing device), servo-control of real and virtual objects, navigation, control, and person tracking.

Instead of using stationary sensors sensing the motion of an object, we use multiple sensors, e.g., cameras, attached to the moving object. The sensors acquire 2D signals of a surrounding scene, and the optical flows in the signals are analyzed to determine relative 6-DOF motion of the object.

### Motion Sensor

The motion sensors according to a preferred embodiment of the invention use an "Artificial Retina" (AR) for acquiring images, Mitsubishi Electric Inc. part number M64283FP. The AR is a CMOS image sensor with 128x128 pixels. The AR chip achieves high performance (up to 250Hz frame rate) at low power consumption (15mW). The AR chip can execute the 2D projection of an input image. The projection sums all pixels in columns in the vertical direction and rows in the horizontal direction. The image area is approximately 9mm². The relative small size (11x7 mm) and low cost of the AR makes this sensor ideal for wearable computer applications as described below.

### Optical Motion Tracking

Any motion of a sensor induces a flow field in signals acquired by the moving sensor. If there is no motion in the scene, then the flow will be due entirely to the 3D motion field resulting from the sensor movement, i.e., egomotion. In computer vision, the recovery of camera motion and scene structure from optical flow is a relatively mature field, see Horn, "Robot Vision," MIT Press, Chap. 17, 1986. Optical flow analysis is the basis for various passive navigation techniques, see for example Negahdaripour in "Direct passive navigation: Analytical solutions for planes and curved surfaces," Technical Report AIM-863, MIT AI Laboratory, 1985.

### Global Displacement Vector

However, instead of computing a dense flow field as in the prior art, we use a much simpler analysis. Given minimal occlusion, a large depth, little specularity and minor lighting changes, the flow field can be represented globally by a *single* displacement vector. This single displacement vector summarizes the camera motion as projected on the image plane, e.g., thirty pixels to the left and forty pixels down. The 2D motion is valid up to a scale factor unless scene depth is also recovered.

### Measuring 2D Translation

Because 2D sensor motion consists of two independent DOF, one effective strategy is determine compute the displacements (*dx; dy*) independently using horizontal and vertical projections of the 2D signal. The resulting 1D projection signals can be easily tracked with inter-frame analysis, i.e., displacement matching, to determine the 2D motion vector (*dx; dy*).

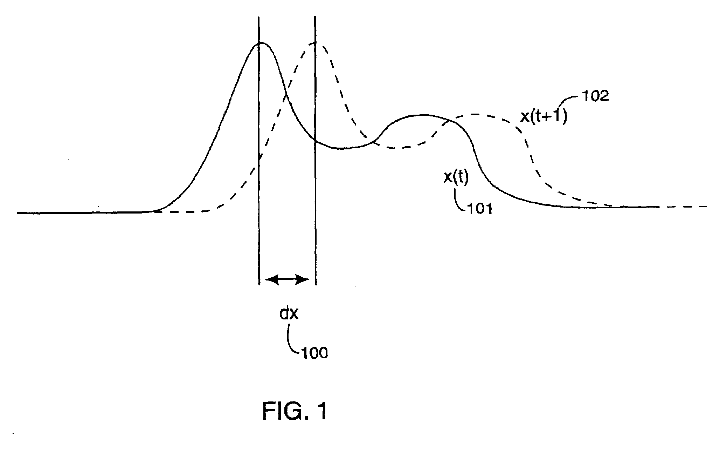

Figure 1 shows the translation or displacement (*dx*) 100 of a 1D projection of a signal at two consecutive time frames *x(t)* 101 and *x(t+1)* 102. Matching *X* and *Y* projection signals is done independently and in parallel. Determining inter-frame displacement for each component is done by shifting the current projection signal until it best matches or overlaps the previous projection, and recording the resulting shift. The AR, described above, computes horizontal and vertical projections "on-chip."

A projection-based analysis, according to our invention, is much faster than a conventional 2D dense optical flow calculation which, in the limit, yields the same displacement (*dx; dy*) at every pixel with a great deal of unnecessary in the computation. Projection-based 1D analysis gives a qualitative measure of motion and is sufficient for some low-level estimation tasks. Projection-based analysis is also faster than 2D correlation analysis since it performs two independent searches on 1D signals, as opposed to a full search on a 2D signal.

Furthermore, projection-based motion-tracking has an advantage. By summing intensities in a projection, the signals to be matched are in effect smoothed and less sensitive to point-sources of specularity and/or localized occlusions. This feature allows more stable measurements to be computed without sacrificing precision.

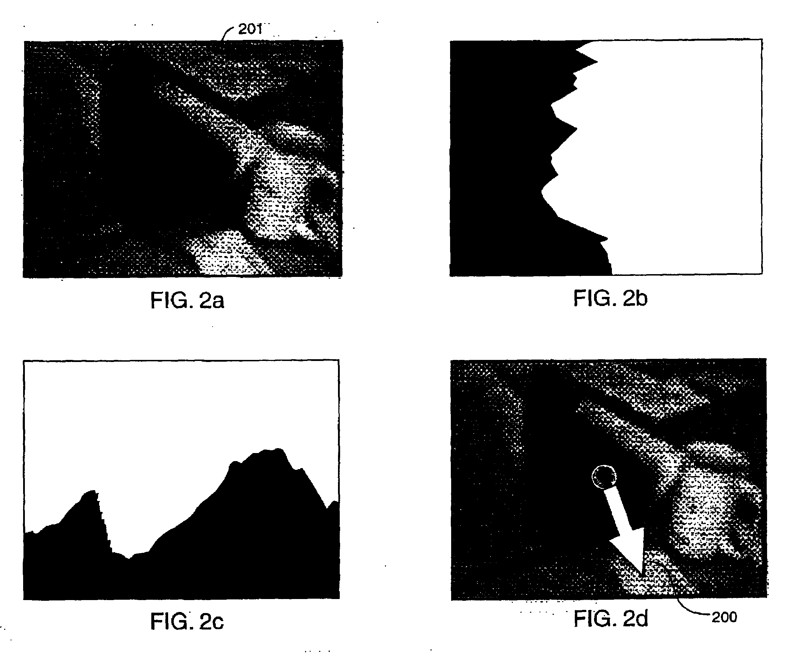

Figures 2a and 2d show example images from a sequence of a camera being moved in front of a desk. Figure 2a shows a previous image 201 at time *t-1.* Figure 2d shows the current image 204 at time *t*, and the instantaneous global displacement vector 200 emanating from the center of the image. Figures 2b-c show the 1D vertical and horizontal projections, respectively. In Figures 2b-c, the black portion of the graph indicates the amount of brightness in the horizontal and vertical directions across the image of Figure 2a.

### Measurement of Depth

Assuming large scene depth and minimal occlusions, the motion of the sensor along the sensing axis towards a static object or scene will manifest itself as projections which "shrink" or "expand," i.e., there is a scale change in the 1D signals. For example, if scaling were present in Figure 1, then curve 102 would be a "stretched" version of curve 101. Therefore, a 3D global displacement vector (*dx; dy; ds*), can be determined by also scaling (*ds*) both the vertical and horizontal projections of two successive 2D signals to obtain a best fit.

Naturally, the *X* and *Y* projections are constrained to have the same scale change. In practice, estimation of scale is coupled with estimation of translation and a joint optimization of three parameters (*dx; dy; ds*) is required. This simultaneous optimization is required to decouple the different degrees-of-freedom affecting the motion flow.

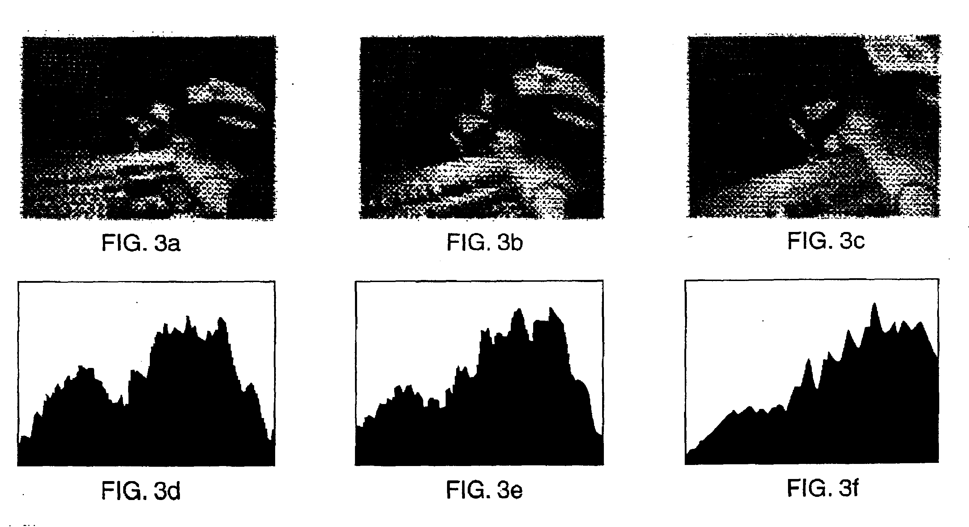

Figure 3a-c illustrates three frames from a sequence where the camera moves towards an object in the scene. Figures 3d-f show the corresponding 1D horizontal projections. Note that both lateral translation and movement in depth are present in the projections. The 1D signals are seen to be "dilated," and slightly shifted frame-to-frame. Also, objects disappear at the image border as a result of the change in depth. If the motion is reversed, then new objects appear at the border. This example illustrates typically encountered variations in (*dx; dy; ds*).

However, as we described below, it is not always necessary to measure scale in order to recover motion along the optical axis. We can design 6-DOF passive sensors which measure full 3D translation (*dx; dy; dz*) directly.

### Simple 6-DOF Sensor

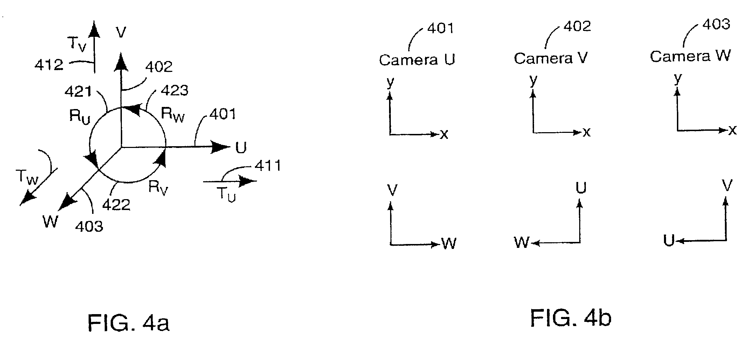

As shown in Figure 4a, a most elementary 6-DOF sensor includes three orthogonally mounted cameras with their optical axes aligned and pointing outwards along the three major Cartesian axes (*U, V,W*) 401 -403. Figure 4a also shows the various translational (*T*_{*UVW*}) 411-413 and rotational (*R*_{*UVW*}) 421-423 motions that can be experienced by this rigid structure. Figure 4b shows the correspondence between the local camera coordinates (*x, y*) and the world object coordinates (*U, V,W*).

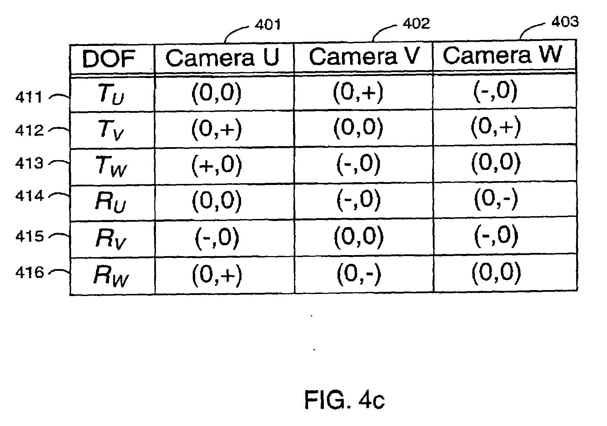

Figure 4c, in tabular form, indicates the resulting sign of the measured camera displacements induced by each independent DOF. It is possible to recover all six degrees of freedom with this configuration: three cameras with two measurements per camera corresponds to 6 DOFs. The rotation about the camera's optical axis will yield a 2D displacement of (*0; 0*) when the scale change (*ds*) is infinitesimal. In fact, all measured quantities are infinitesimal differentials. A table look-up with the signs, -, 0, or +, of the measurements will yield the relative displacement.

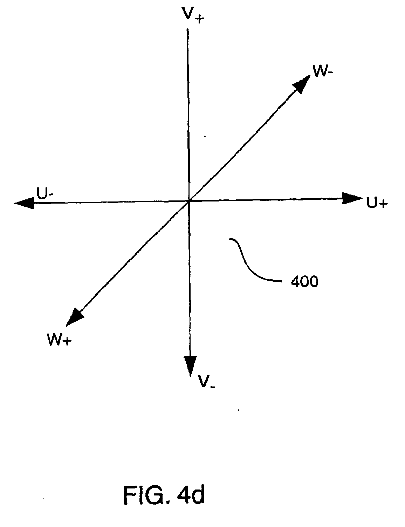

It should be noted that the sensor of Figure 4a is the embodiment of a design used to illustrate the basic operational principles of measuring multiple DOFs with multiple 2D motion-sensing cameras. In practice, redundancy, i.e., using more than three cameras may be necessary for reliable estimation of complex motions, especially rotation. For example, as shown in Figure 4d, six cameras can be used, with two on each axis, pointing in opposite direction (*U*_{*+*}*, V*_{*+*}*, W*_{*+*}*, U*_{*-*}*, V*_{*-*}*, W*_{*-*}) 400.

Redundant designs properly overconstrain the numerical computations needed for 6-DOF estimation and also help in detecting ambiguous readings and "missing signals" that may be due to featureless views seen by some of the sensors. Additional measurement of each DOF by different sensors can also help with the inherent scale ambiguity associated with lack of depth information.

The next section describes several redundant designs for computing rotation using 2 sensors.

### Measurement of Roll

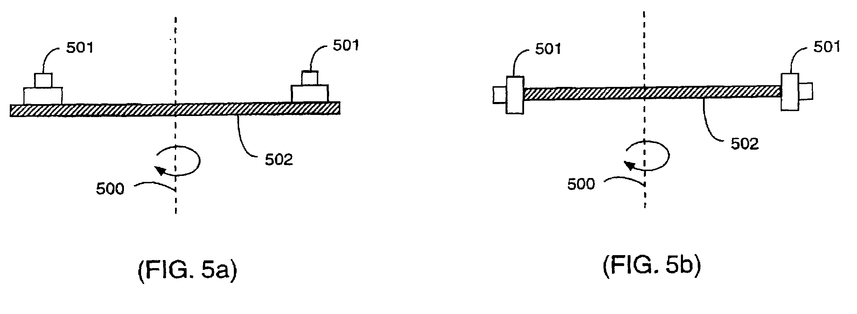

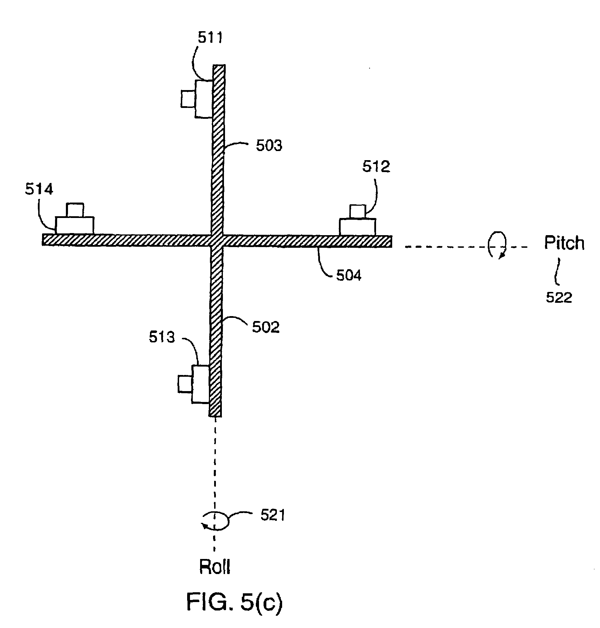

As shown in Figures 5a and 5b, rotation about the axis 500 can be measured using two sensors 501-502 mounted at opposite ends of a rigid yoke 502. In the configuration of Figure 5a, the sensors point in the same direction. Alternatively, as shown in Figure 5b, the sensors can point in opposite directions. For the configuration in Figure 5a, rotation about the indicated axis is indicated by opposite 2D displacement vectors from the two sensors: (*dx; dy*) and (*-dx; -dy*). In the configuration of Figure 5b, the sensors point in opposite directions. In this case, the resulting displacement vectors are (*dx; 0*) and (*-dx; 0*). In aeronautical terms, this motion is termed "roll." Each sensor acquires a sequence of two-dimensional signals, and global displacement vectors are determined for successive pairs of signals of each sequence. If the sensors are cameras, the pairs of 2D signals are images. Alternatively, a V-shaped mirror can be placed in front of the camera to sense roll.

### Measurement of Pitch

We can extract additional degrees of freedom from a single yoke with further processing, e.g., differential depth changes between the two sensors for estimating yaw. Computing some of the DOFs from a single yoke may be sensitive to noise and ambiguities. For example, a change in pitch induces a flow field similar to upward/downward translation. Prior motion information, may be used to disambiguate.

### Measurement of Yaw

Figure 5(c) shows a configuration where two orthogonally mounted yokes 503-504 and four sensors 511-514 are used to measure both roll 521 and pitch 522. It should be apparent that this can be extended to a triple yoke or 3D design.

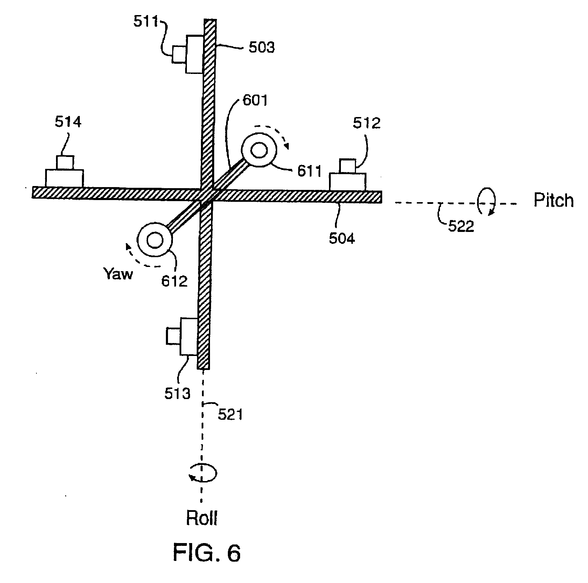

However, as shown in Figure 6, there are alternative ways of computing all three rotations. For example, adding a third yoke 601 in the plane formed by the first two, leads to the design. This configuration can measure roll, pitch and yaw. The third yoke 601 can be eliminated if its two sensors 611-612 are instead mounted facing upwards (or downwards) on either of the yokes of Figure 5(c).

### 6-DOF Sensors

Because all active degrees-of-freedom can contribute to the optical flow of each camera, appropriate estimation techniques are needed to extract each DOF with as little ambiguity as possible. In other words, we decouple and map the 2D displacements of all sensors to a consistent estimate of rigid translation and rotation.

As stated above, there are various configurations that can be used in the design of a 6-DOF sensor. In fact, the best configuration of multiple sensors can vary with the geometry of the object to which the sensors are to be attached, hence necessitating different estimation algorithms in each case.

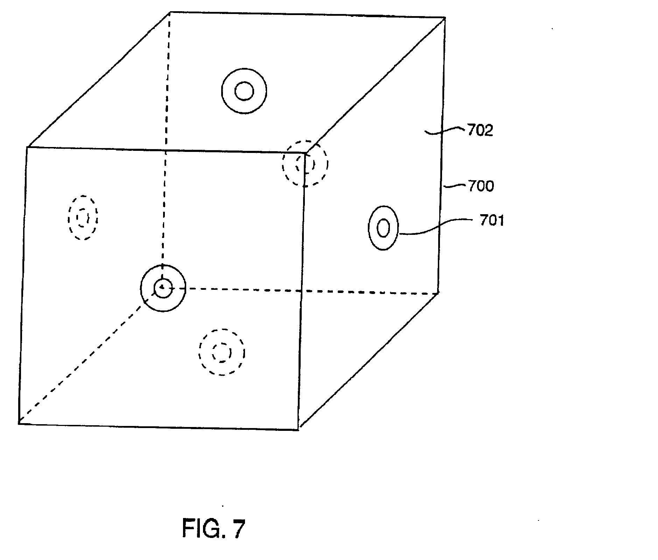

As shown in Figure 7, one appropriate compact configuration is in the form of a cubic enclosure 700 with a motion sensor 701 on each face 702 looking outwards, resulting in twelve measurements which are sufficient to recover all 6 DOF. This design also has redundancy built in: translation along each direction and rotation about each axis can be measured with two completely different visual fields. Non-orthogonal sensor mounts are also possible, however, their estimation algorithms require more complex analysis of the motion signals. Exotic variations of polyhedrons, such as a dodecahedron can be used to yield a total of twenty-four measurements, for example.

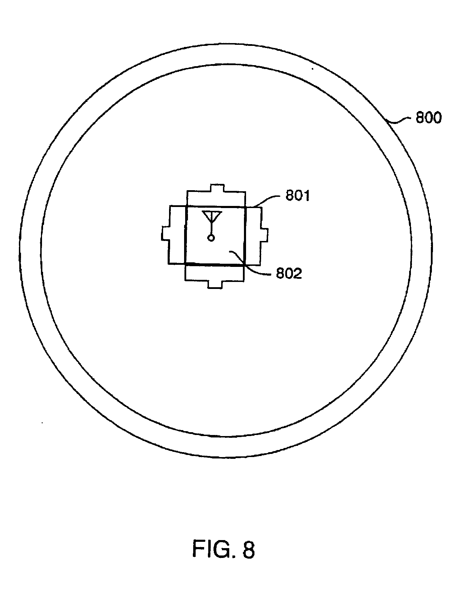

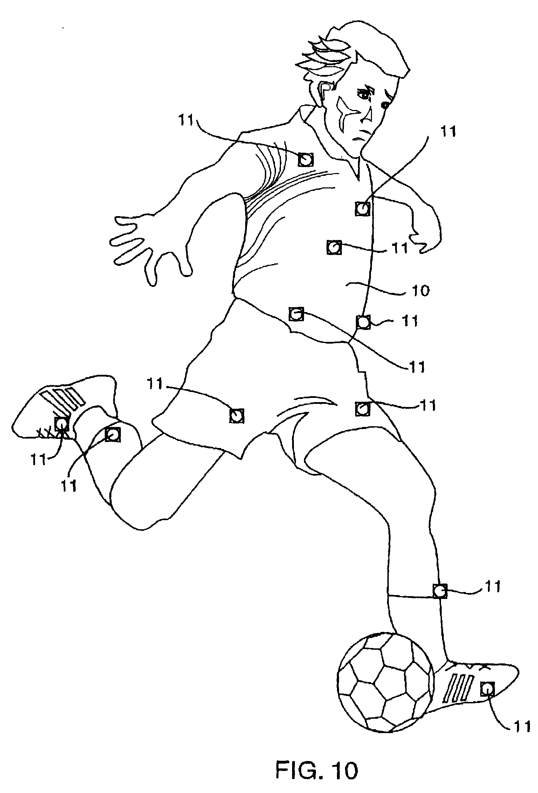

In another design as shown in Figure 8, a ball 800 is made of transparent material, e.g., plastic. Multiple sensors 801 centered within the ball pointing outward in different directions. The ball can be rolled, thrown, bounced, etc., or used in a sporting event. A transmitter 802 relays the motion information to a remote site for analysis, simulation, feedback, control, servo-control, etc. In a sports training application as shown in Figure 10, a user 10 can receive feedback on his/her performance. For example, the sensors can measure the relative motion of the limbs, and the ball.

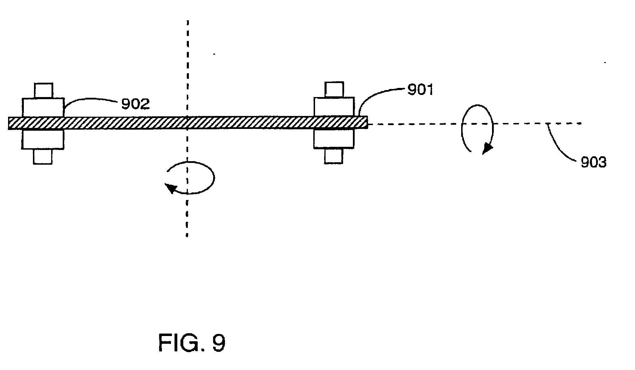

Figure 9 shows an example of a yoke design which reduces the possibility of a structureless visual field and the subsequent inability to compute displacement. Here, pairs of sensors 901-902 are mounted back-to-back. At least one of the pairs will yield a strong displacement signal. Notice that this design has the added benefit of being able to compute an additional orthogonal degree of rotation, that is, rotation about the yoke axis 903.

A triple yoke equipped with this same opposing pair unit design is sufficiently redundant for 6-DOF motion estimation. A total of twenty-four measurements (3 yokes, 4 sensors per yoke and 2 scalars (*dx; dy*) per sensor) for estimating six parameters.

### Parameter Estimation

Estimation of 6-DOFs at a single time-step ("snapshot") requires solving an over-constrained system of non-linear equations. Using conventional least-squares cost functions this leads to the Levenberg-Marquardt (L-M) algorithm, see Marquardt, "An algorithm for least-squares estimation of nonlinear parameters," Journal of the Society of Industrial and Applied Mathematics, 11(2): pp.431-441, 1963. Continuous tracking of the 6-DOF parameters is a recursive estimation, see Gelb, "Applied Optimal Estimation," MIT Press, 1974, and is best solved with Kalman filters, see Grewal et al. in "Kalman Filtering: Theory and Practice," Prentice Hall, 1993.

For example, tracking with non-linear ("extended") Kalman filters is standard procedure in radar telemetry for inertial guidance of moving targets. Since the nonlinearity (rotation) is linearized, a recursive version of the L-M algorithm with a non-stationary cost function is essentially equivalent to an extended Kalman filter.

### Ergonomic Design

The ergonomic design of multiple-DOF devices according to our invention can be fully coordinated with their motion-sensing functionality and intended use. For example, a hand-held joystick with multiple outward-facing sensors can be affected by the user's body appearing in images from several sensors, unless the orientation of the sensors is such that field of view occlusion by the user is minimized. On the other hand, when used as 6-DOF sensor attached to a "free floating" moving object the design constraints are far less constrained.

Although the invention has been described by way of examples of preferred embodiments, it is to be understood that various other adaptations and modifications may be made within the spirit and scope of the invention. Therefore, it is the object of the appended claims to cover all such variations and modifications as come within the true spirit and scope of the invention.

## Claims

1. An apparatus for sensing three-dimensional motion of an object, comprising:
a plurality of passive sensors mounted to the object, each sensor measuring a scene to produce a sequence of images;
means for determining global displacement vectors for pairs of successive images; and
means for recovering three-dimensional motion from the global displacement vectors.

2. The apparatus of claim 1 wherein the sensors are digital cameras.

3. The apparatus of claim 1 wherein the global displacement vectors are determined from one-dimensional horizontal and vertical displacements of the pairs of successive images.

4. The apparatus of claim 1 wherein both displacement vectors and depth change are determined.

5. The apparatus of claim 1 wherein the three-dimensional motion includes three-degrees of translation and three degrees of rotation.

6. The apparatus of claim 1 wherein two sensors face in the same direction.

7. The apparatus of claim 1 wherein two sensors face in opposite directions.

8. The apparatus of claim 1 wherein two sensors face in a first direction, and two sensors face in a second direction orthogonal to the first direction.

9. The apparatus of claim 1 wherein the plurality of sensors are mounted inside or outside the object, and motion information is transmitted.

10. The apparatus of claim 1 wherein the plurality of sensors are mounted on a person.

11. The apparatus of claim 1 wherein three sensors are arranged on the object so that three sequences of images are substantially orthogonal to each other.

12. A method for sensing three-dimensional motion of an object, comprising the steps of:
mounting a plurality of passive sensors to the object;
measuring, with each sensor, a scene to produce a sequence of images;
determining global displacement vectors for pairs of successive images; and
recovering three-dimensional 6-DOF motion from the global displacement vectors.

13. The method of claim 1 wherein three sensors are arranged on the object so that three sequences of images are substantially orthogonal to each other.
